# EUROPEAN PATENT SPECIFICATION

(11) **EP 4 141 481 B1**
(45) Date of publication and mention of the grant of the patent: **30.09.2026**
(21) Application number: 21192598.7
(22) Date of filing: 23.08.2021
(51) Int. Cl.: G01S 7/497, G01S 17/931

(54) **LIDAR TARGET SIMULATION SYSTEM AND METHOD OF TESTING A LIDAR DEVICE**
LIDAR-ZIELSIMULATIONSSYSTEM UND VERFAHREN ZUM TESTEN EINER LIDAR-VORRICHTUNG
SYSTÈME DE SIMULATION DE CIBLE LIDAR ET PROCÉDÉ DE TEST DE DISPOSITIF LIDAR

(43) Date of publication of application: 01.03.2023
(73) Proprietor: Rohde & Schwarz GmbH & Co. KG, 81671 München (DE)
(72) Inventor: Simper, Benedikt, 81671 München (DE); Carlowitz, Christian, 81671 München (DE); Tschapek, Peter, 81671 München (DE); Vossiek, Martin, 81671 München (DE); Körner, Georg, 81671 München (DE); Birkenhauer, Christoph, 81671 München (DE)
(74) Representative: Novagraaf Group

(56) References cited:
- DE-A1- 102019 106 129
- DE-A1- 102019 118 039

## Description

The invention generally relates to a LIDAR target simulation system for testing a LIDAR device. The invention further relates to a method of testing a LIDAR device by means of a LIDAR target simulation system.

LIDAR (light detection and ranging) devices such as LIDAR sensors become more and more popular in different applications, particularly in the automotive sector due to autonomous driving, also called self-driving vehicles.

Since the LIDAR devices become more and more popular in different technical fields, it is also necessary to validate and compare the different LIDAR devices concerning their respective characteristics. For a vehicle-in-the-loop test of a self-driving vehicle equipped with at least one LIDAR device, a LIDAR target simulator is necessary in order to validate the respective LIDAR device used.

Typically, a target simulator is used to test the LIDAR device while applying a certain target scenario for validating the LIDAR device. Depending on the target scenario applied, at least one target is simulated according to the respective target scenario applied.

In general, the respective target simulator receives a signal transmitted by the LIDAR device and responds with a delayed signal that corresponds to a target or rather obstacle according to the target scenario applied. The delay in time represents the distance of the target simulated.

In the state of the art, the LIDAR target simulators have an inherent minimum target distance that can be simulated, as the LIDAR target simulator is usually located a certain distance away from the LIDAR device. Moreover, the LIDAR target simulator needs a certain time in order to process the received signal transmitted by the LIDAR device in order to generate the response signal, thereby increasing the minimum distance that can be simulated.

Thus, the minimum distance that can be simulated is given by the distance between the LIDAR device and the LIDAR target simulator and by the processing time of the LIDAR target simulator.

DE 102019 118 039 A1 discloses a test assembly for testing an optical measurement appliance such as a LIDAR device. The test assembly comprises a control appliance that comprises a signal processing module, a delay module, and a light control module for each receiving element. The delay module is configured to delay response signals transmitted via optical transmitter elements such that distances of the optical measurement appliance from a screen can be simulated that are larger than the actual distance of the optical measurement appliance from the screen.

DE 10 2019 106 129 A1 discloses a test appliance for testing LIDAR devices. The test appliance is configured to receive light emitted by the LIDAR device. The test appliance is further configured to generate a response signal based on the received light, wherein the response signal is generated with an appropriate delay such that targets hit by the light are simulated. The test appliance is further configured to transmit the response signal back to the LIDAR device.

The object of the present invention is to reduce the minimum possible target distance that can be simulated.

According to the present invention, the problem is solved by a LIDAR target simulation system for testing a LIDAR device according to claim 1.

The LIDAR target simulation system according to the present invention is based on the idea to predict a future behavior of the LIDAR device to be tested based on an analysis of at least one scan signal of the LIDAR device in order to reduce the minimum possible target distance that can be simulated.

In other words, a digital twin of the LIDAR device may be provided, wherein the digital twin of the LIDAR device corresponds to a simulation of the LIDAR device or rather of the scan signals generated by the LIDAR device. The response signal is generated based on the current and/or future behavior of the digital twin, namely based on the at least one simulated current and/or future scan signal of the LIDAR device, instead of the actual (i.e. real) current and/or future scan signal(s) generated by the LIDAR device to be tested.

Based on the predicted future behavior, a response signal to a further scan signal of the LIDAR device to be tested may be generated before that further scan signal even arrives at the pattern detection module. Thus, the distance between the LIDAR device to be tested and the pattern detection module is not a delimiting factor for simulating targets anymore.

In fact, targets that are closer than the distance between the LIDAR device to be tested and the pattern detection module can be simulated by means of the LIDAR target simulation system according to the present invention.

Moreover, the processing time of the LIDAR target simulation system can also be accounted for or rather compensated by the LIDAR target simulation system according to the present invention. The generated response signal may be time-shifted in order to compensate the processing time of the LIDAR target simulation system. Thus, the minimum possible simulation distance is reduced even further.

In fact, it is even possible to reduce the minimum target simulation distance to 0 with the LIDAR target simulation system according to the present invention.

According to an aspect of the present invention, the at least one characteristic parameter comprises a pulse shape of the at least one scan signal, an angle of departure of the at least one scan signal, a time of detection of the at least one scan signal, pulse rate of the at least one scan signal, a pulse position of the at least one scan signal, a line rate of the at least one scan signal, a column rate of the at least one scan signal, and/or a repetition rate of the at least one scan signal.

Therein and in the following, the term "pulse shape" may relate to the size, the geometric cross section and/or the temporal course of the amplitude of a single pulse of the scan signal.

The "angle of departure" may relate to the azimuth and/or the elevation angle of the at least one scan signal with respect to the LIDAR device.

The term "pulse rate" relates to the number of light pulses that are generated by the LIDAR device to be tested per second.

The term "pulse position" relates to the position or rather the positions of the light pulses generated by the LIDAR device to be tested, particularly the location on a screen of the LIDAR target simulation system. Particularly, the term "pulse positions" is understood to include a scan pattern, wherein the scan pattern relates to the temporal course of the positions of the light pulses generated by the LIDAR device to be tested, particularly the temporal course of the respective locations on the screen.

The term "line rate" relates to the number of lines that the LIDAR device to be tested scans per second.

The term "column rate" relates to the number of columns that the LIDAR device to be tested scans per second.

The term "repetition rate" is understood to denote the rate at which the LIDAR device completes whole scans of its environment, i.e. the rate at which a predetermined scan pattern of the LIDAR device to be tested repeats. The repetition rate may also be called "frame rate" of the LIDAR device.

Generally, only a portion of the entire environment may be scanned.

In fact, the certain portion of the entire environment may relate to the field of view of the LIDAR device.

According to another aspect of the present invention, the LIDAR simulation module is configured to simulate the at least one current and the at least one future scan signal of the LIDAR device based on a state space model of the LIDAR device. In general, the state space model of the LIDAR device employs a mathematical model of the LIDAR device that comprises all parameters, particularly the at least one characteristic parameter described above, that are necessary in order to describe the temporal course of scan signals generated by the LIDAR device. Thus, in principle, if the state of the LIDAR device is known at one point in time, then the future behavior of the LIDAR device, i.e. future scan signals generated by the LIDAR device, can be predicted based on the state space model.

In an embodiment of the present invention, the LIDAR simulation module comprises a Kalman filter and/or a machine-learning module, wherein the Kalman filter and/or the machine-learning module is configured to simulate the at least one current and the at least one future scan signal of the LIDAR device based on the state space model of the LIDAR device.

In general, the Kalman filter may be configured to determine relevant parameters of the state space model based on available parameters, i.e. parameters that have been measured and/or determined. For example, one or several of the characteristic parameters described above may be measured and/or determined by means of the pattern detection module. The Kalman filter may determine missing parameters of the state space model based on the measured and/or determined parameters, particularly based on the at least one characteristic parameter.

Similarly, the machine-learning module may be trained to determine relevant parameters of the state space model based on available parameters. For example, one or several of the characteristic parameters described above may be measured by means of the pattern detection module. The machine-learning module may determine missing parameters of the state space model based on the measured parameters, particularly based on the at least one characteristic parameter.

In a further embodiment of the present invention, the pattern detection module is configured to receive at least one further scan signal generated by the LIDAR device during testing of the LIDAR device, wherein the pattern detection module further is configured to determine at least one updated characteristic parameter of the LIDAR device based on the at least one further scan signal, and wherein the LIDAR simulation module is configured to update parameters of the state space model based on the at least one updated characteristic parameter. In other words, the state space model may be continuously updated based on current measurements of the scan signals generated by the LIDAR device to be tested. This way, it is ensured that errors in the state space model or rather in the determined state of the LIDAR device do not accumulate to large errors in the simulated scan signals.

Particularly the LIDAR simulation module is configured to update the parameters of the state space model by means of a closed-loop control technique. According to the closed-loop control technique, the parameters of the state space model are predicted or rather determined by the LIDAR simulation module. New measurement data with respect to the current scan signal(s) generated by the LIDAR device, particularly one or several updated characteristic parameters, is obtained. The parameters of the state space model are corrected based on the obtained measurement data, particularly based on the one or several updated characteristic parameters.

According to a further embodiment of the present invention, the signal response generator module comprises an analog pulse responder, wherein the analog pulse responder is configured to generate the response signal to be received by the LIDAR device. The analog pulse responder may comprise a detection circuit, wherein the detection circuit is configured to detect the at least one scan signal generated by the LIDAR device to be tested. The analog pulse response may be configured to autonomously generate the response signal based on the detected scan signal. The response signal may be generated with a predefined delay, wherein the predefined delay may be set based on the scenario and/or based on the at least one simulated scan signal.

According to an aspect of the present invention, the analog pulse responder comprises an analog integrator, wherein the analog integrator is configured to integrate a constant voltage signal, thereby obtaining an integrated voltage signal, and wherein the analog pulse responder is configured to generate the response signal when the integrated voltage signal reaches a predefined threshold. More precisely, the constant voltage signal may be integrated over time. A value of the integrated voltage signal may be compared to the predefined threshold continuously or after predetermined time intervals. This way, the response signal is generated with a predetermined delay, wherein the predetermined delay depends on the magnitudes of the constant voltage signal and of the predefined threshold.

According to a further aspect of the present invention, the signal response generator module is configured to adjust a magnitude of the constant voltage signal and/or the predefined threshold based on the at least one simulated scan signal of the LIDAR device and/or based on the test scenario. In other words, the signal response generator module may set a predetermined delay of the response signal by adjusting the magnitude of the constant voltage signal and/or the predefined threshold based on the at least one simulated scan signal of the LIDAR device and/or based on the test scenario, such that the response signal is correctly generated for the specific test scenario at hand.

The analog integrator may be configured to start integrating the constant voltage signal upon detection of the at least one scan signal. This way, it is avoided that a response signal is generated although a corresponding scan signal of the LIDAR device is missing. Moreover, a correct response signal is generated even on the case of the scan signals generated by the LIDAR device comprising jitter.

Moreover, the required sampling rate of digital modules (i.e. the pattern detection module and/or the LIDAR simulation module) of the LIDAR target simulation module can be lowered significantly as the temporal resolution of the detection and response generation does no longer depend on the input/output rate of the digital modules. This allows for using more cost-efficient hardware for the digital modules, thereby reducing the costs of the LIDAR target simulation system.

Moreover, a higher resolution is obtainable with respect to setting the delay after which the response signal is generated.

In an embodiment of the present invention the signal response generator module is configured to generate the response signal with a predetermined time delay, particularly wherein the predetermined time delay depends on the at least one simulated scan signal of the LIDAR device and/or on the test scenario. In general, the predetermined time delay causes the LIDAR device to be tested to receive the response signal with the predetermined time delay plus the travel time of the response signal from the signal response generator module to the LIDAR device. This way, objects can be simulated that have a predetermined distance from the LIDAR device. Thus, the test scenario may comprise one or several targets and/or obstacles that each have a predefined distance from the LIDAR device, wherein the individual distances may be pairwise equal and/or different from each other.

According to a further embodiment of the present invention, the test scenario is a three-dimensional test scenario and/or wherein the test scenario comprises at least one object, wherein a simulated distance of the at least one object is smaller than a length corresponding to the speed of light times a processing time of the signal response generator module.

The three-dimensional test scenario may comprise one or several three-dimensional targets and/or one or several three-dimensional obstacles. Thus, a realistic testing scenario may be provided for testing the LIDAR device.

Alternatively or additionally, at least one simulated object, for example at least one simulated target and/or at least one simulated obstacle, may have a simulated distance that is smaller than what is achievable with conventional LIDAR target simulation systems, as the simulated distance is smaller than the distance light travels within the processing time of the signal response generator module. This is achievable as the response signal may already be generated based on the simulated scan signal while the respective actual (i.e. real) scan signal of the LIDAR device under test is still travelling towards the pattern recognition module.

Therein and in the following, the term "processing time of the signal response generator module" is understood to denote the time needed to generate the response signal based on the simulated scan signals of the LIDAR device and based on the test scenario.

Optionally, the processing time of the signal response generator module may also include the time needed by the pattern detection module in order to receive and process the at least one scan signal.

In a further embodiment of the present invention, the LIDAR device is a flash LIDAR device. In general, flash LIDAR devices illuminate the whole environment to be scanned at once instead of scanning the environment with a pattern or rather raster of individual smaller light pulses. Accordingly, characteristic parameters associated with the flash LIDAR device may be the pulse shape of the scan signal, the angle of departure of the scan signal, the pulse rate of the scan signal and the repetition rate (frame rate) of the scan signal, wherein the pulse rate is equal to the repetition rate (frame rate).

According to the invention, the problem further is solved by a method of testing a LIDAR device by means of a LIDAR target simulation system according to claim 14.

The LIDAR target simulation system described above is configured to perform the method of testing a LIDAR device.

Regarding the advantages and further properties of the method of testing a LIDAR device, reference is made to the explanations given above with respect to the LIDAR target simulation system, which also hold for the method of testing a LIDAR device and vice versa.

According to an aspect of the present invention, the at least one current and/or future scan signal of the LIDAR device is simulated based on a state space model of the LIDAR device. In general, the state space model of the LIDAR device employs a mathematical model of the LIDAR device that comprises all parameters, particularly the at least one characteristic parameter described above, that are necessary in order to describe the temporal course of scan signals generated by the LIDAR device. Thus, in principle, if the state of the LIDAR device is known at one point in time, then the future behavior of the LIDAR device, i.e. future scan signals generated by the LIDAR device, can be predicted based on the state space model.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a LIDAR target simulation system according to the present invention;
- Figure 2 shows a block diagram of the LIDAR target simulation system of Figure 1 according to a first embodiment of the invention; and
- Figure 3 shows a block diagram of the LIDAR target simulation system of Figure 1 according to a second embodiment of the invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

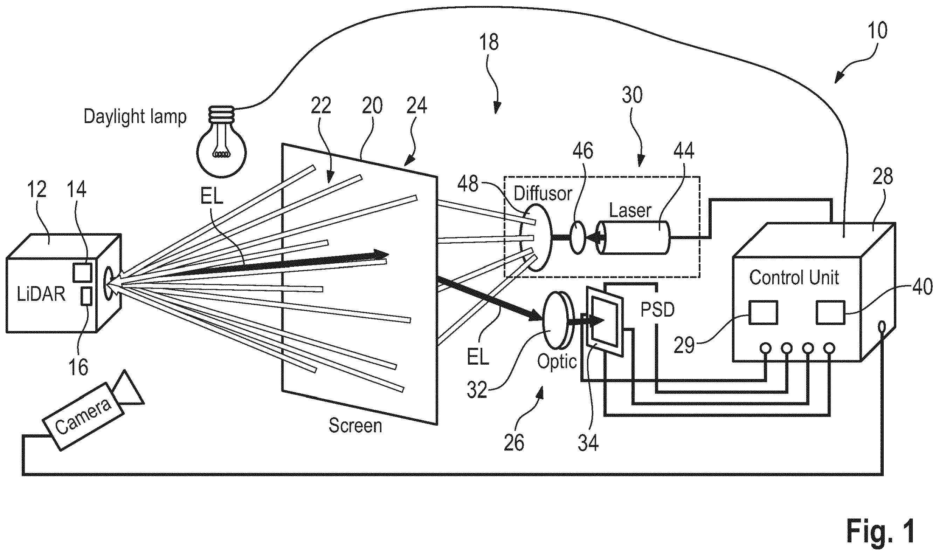

Figure 1 schematically shows a LIDAR target simulation system 10 for testing a LIDAR device 12.

In general, the LIDAR target simulation system 10 is configured to receive scan signals (denoted by "EL" in Figure 1) generated by the LIDAR device 12. The LIDAR target simulation system 10 generates an appropriate response signal based on the scan signal received from the LIDAR device 12 and based on a test scenario, such that one or more objects such as targets and/or obstacles are simulated for testing the LIDAR device 12.

The LIDAR device 12 has a light emitting unit 14 as well as a light receiving unit 16. The light emitting unit 14 and the light receiving unit 16 are integrated within a housing of the LIDAR device 12.

Further, the LIDAR simulation system 10 comprises a LIDAR target simulator 18 that interacts with the LIDAR device 12 in order to evaluate the LIDAR device 12 by simulating a respective target (scenario) for the LIDAR device 12 for evaluating purposes.

The LIDAR target simulator 18 comprises a screen 20 that has a front side 22 as well as a rear side 24 that is opposite to the front side 22.

The LIDAR target simulator 18 further comprises a pattern detection module 26 that is connected with a control and/or analysis module 28 in a signal transmitting manner.

The pattern detection module 26 may be partially integrated into the control and/or analysis module 28. Alternatively, the pattern detection module 26 may be established separately from the control and/or analysis module 28.

Therein and in the following, the term "connected in a signal transmitting manner" is understood to denote a cable-based or wireless connection that is configured to transmit signals between the respective devices or components.

Moreover, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

Further, the LIDAR target simulator 18 has a LIDAR simulation module 29 and a signal response generator module 30 that are also connected with the control and/or analysis module 28 in a signal transmitting manner.

As is shown in Figure 1, the LIDAR simulation module 29 may be partially or completely integrated into the control and/or analysis module 28. Alternatively, the LIDAR simulation module 29 may be established separately from the control and/or analysis module 28.

Moreover, the signal response generator module 30 may be partially integrated into the control and/or analysis module 28. Alternatively, the signal response generator module 30 may be established separately from the control and/or analysis module 28.

In general, the pattern detection module 26 is configured to determine the location of impinging light generated by the LIDAR device 12, namely of a scan signal generated by the LIDAR device 12, which hits the screen 20, particularly the front side 22 of the screen 20.

The pattern detection module 26 forwards information concerning the respective location to the control and/or analysis module 28 and to the LIDAR simulation module 29 for further processing.

In the shown embodiment, the pattern detection module 26 comprises an optical element 32, namely an optic, which faces the screen 20, particularly the rear side 24 of the screen 20 in the shown embodiment. The optical element 32 is also associated with a position sensitive detector (PSD) 34 of the pattern detection module 26.

Hence, the optical element 32 focuses the light available on the rear side 24 of the screen 20 that is at least partially transparent for the light used for testing the LIDAR device 12 such that the position sensitive detector 34 is enabled to determine the location of the impinging light on the screen 20, i.e. of the scan signal(s), in an accurate manner.

The position sensitive detector 34 forwards at least a respective signal to the control and/or analysis module 28 and to the LIDAR simulation module 29, wherein the signal encompasses the information concerning the location of the scan signal(s) on the screen 20.

Moreover, the pattern detection module 26 determines at least one characteristic parameter of the scan signal.

In general, the at least one characteristic parameter is associated with properties of the at least one scan signal.

The at least one characteristic parameter comprises a pulse shape of the at least one scan signal, an angle of departure of the at least one scan signal, a time of detection of the at least one scan signal, pulse rate of the at least one scan signal, a pulse position of the at least one scan signal, a line rate of the at least one scan signal, a column rate of the at least one scan signal, and/or a repetition rate of the at least one scan signal.

Therein and in the following, the term "pulse shape" may relate to the size, the geometric cross section and/or the temporal course of the amplitude of a single pulse of the scan signal.

The "angle of departure" may relate to the azimuth and/or the elevation angle of the at least one scan signal with respect to the LIDAR device 12.

The term "pulse rate" relates to the number of light pulses that are generated by the LIDAR device 12 to be tested per second.

The term "pulse position" relates to the position or rather the positions of the light pulses generated by the LIDAR device 12 to be tested, particularly the location on the screen 20.

Particularly, the term "pulse positions" is understood to include a scan pattern, wherein the scan pattern relates to the temporal course of the positions of the light pulses generated by the LIDAR device 12 to be tested, namely the temporal course of the respective locations on the screen 20.

The term "line rate" relates to the number of lines that the LIDAR device 12 scans per second.

The term "column rate" relates to the number of columns that the LIDAR device 12 scans per second.

The term "repetition rate" is understood to denote the rate at which the LIDAR device 12 completes whole scans of its environment, i.e. the rate at which a predetermined scan pattern of the LIDAR device 12 repeats. The repetition rate may also be called "frame rate" of the LIDAR device 12.

The pattern detection module 26 forwards the at least one determined characteristic parameter to the control and/or analysis module 28 and to the LIDAR simulation module 29.

The LIDAR simulation module 29 is configured to simulate at least one current and/or future scan signal of the LIDAR device 12 based on the at least one characteristic parameter determined by the pattern detection module 26.

In other words, a digital twin of the LIDAR device 12 may be provided by the LIDAR simulation module 29, wherein the digital twin of the LIDAR device 12 corresponds to a simulation of the LIDAR device 12.

The LIDAR simulation module 29 may simulate the at least one current and/or future scan signal of the LIDAR device 12 based on a state space model of the LIDAR device 12.

In general, the state space model of the LIDAR device 12 employs a mathematical model of the LIDAR device 12 that comprises all necessary parameters in order to describe current and/or future scan signals generated by the LIDAR device 12. Particularly, the parameters of the state space model comprise the at least one characteristic parameter described above.

Thus, in principle, if the state of the LIDAR device 12 is exactly known at one point in time, then the future behavior of the LIDAR device 12, i.e. future scan signals generated by the LIDAR device, can be predicted based on the state space model for all times. However, this would require perfect knowledge of all parameters of the state space model at a single given time.

In practice, the current state of the LIDAR device 12 is usually not known perfectly, such that a perfect prediction of the future behavior of the LIDAR device 12 is not possible based on a state determined for a single given time. Moreover, usually not all parameters of the state space model can be measured directly or only with considerable more effort.

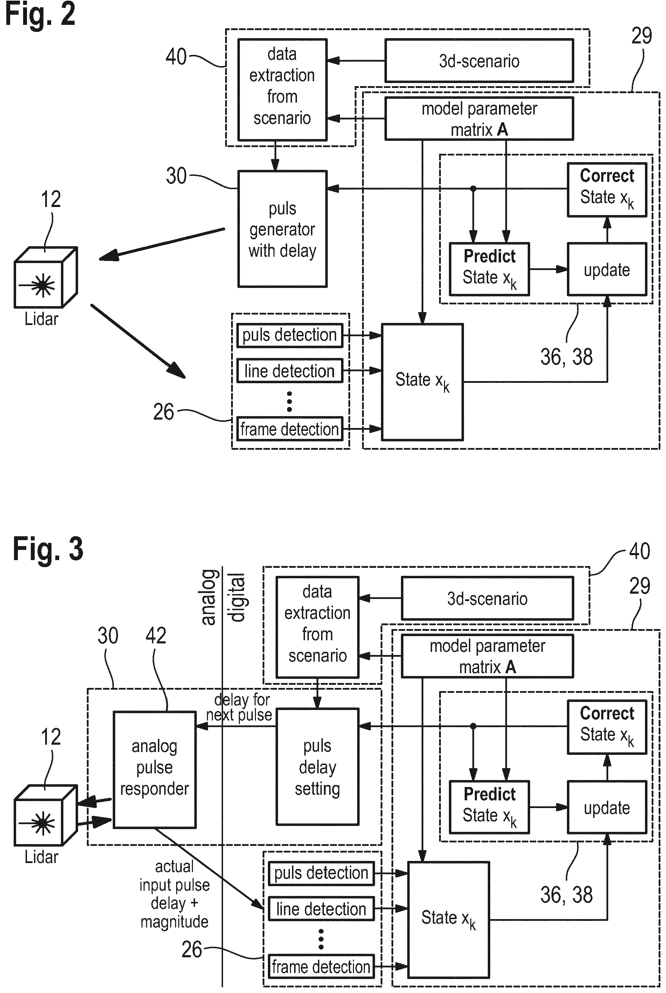

As is illustrated in Figure 2, in order to counteract this problems, the LIDAR simulation module 29 comprises a Kalman filter 36 and/or a machine-learning module 38 that are part of a closed control loop in order to determine the state of the LIDAR device 12.

In fact, the LIDAR simulation module 29 may continuously update the parameters of the state space model by means of a closed-loop control technique.

The closed-loop control technique may comprise the following steps:
The parameters of the state space model are predicted by the LIDAR simulation module 29 based on a first measurement of the at least one characteristic parameter described above. The parameters may comprise the at least one characteristic parameter determined by the pattern detection module 26.

The parameters may be conflated in a model parameter matrix, which is called "model parameter matrix A" in Figure 2.

This step may be performed only once, while the two steps described in the following may be repeated several times.

If there are parameters of the state space model that cannot be measured, the Kalman filter 36 and/or the machine-learning module 38 may determine the missing parameters based on the available parameters.

Therein, the Kalman filter 36 may employ a mathematical model of the LIDAR device 12 in order to determine the missing parameters based on the available parameters. Alternatively or additionally, the machine-learning module 38 may be trained to determine the missing parameters based on the available parameters.

During testing of the LIDAR device 12, new measurement data with respect to the current scan signal(s) generated by the LIDAR device 12 may be obtained after predefined time intervals, particularly continuously. Particularly, the pattern detection module 26 may determine updated characteristic parameters based on at least one further scan signal generated by the LIDAR device 12, particularly based on several further scan signals generated by the LIDAR device 12.

The parameters of the state space model are corrected based on the obtained measurement data, particularly based on the one or several updated characteristic parameters. Particularly, the parameters that are not available may be corrected by means of the Kalman filter 36 and/or by means of the machine-learning module 38.

The LIDAR simulation module 29 may forward the at least one simulated scan signal to the control and/or analysis module 28.

Further, the LIDAR target simulator 18 has a scenario generation module 40 that generates a test scenario for testing the LIDAR device 12.

As is shown in Figure 1, the scenario generation module 40 may be partially or completely integrated into the control and/or analysis module 28. Alternatively, the scenario generation module 40 may be established separately from the control and/or analysis module 28.

It is noted that the scenario generation module 40 may be completely independent of the LIDAR simulation module 29. In other words, the generated test scenario may not be correlated with the simulated scan signal(s) and vice versa.

The test scenario may be a three-dimensional test scenario. The three-dimensional test scenario may comprise one or several three-dimensional targets and/or one or several three-dimensional obstacles, such that a realistic testing scenario is provided for testing the LIDAR device 12.

Alternatively or additionally, the test scenario may comprise at least one object whose simulated distance from the LIDAR device 12 is smaller than a length corresponding to the speed of light times a processing time of the signal response generator module 30.

Therein and in the following, the term "processing time of the signal response generator module" is understood to denote the time needed to generate the response signal based on the simulated scan signals of the LIDAR device 12 and based on the test scenario, as will be described hereinafter.

Optionally, the processing time of the signal response generator module 30 may also include the time needed by the pattern detection module 26 in order to receive and process the at least one scan signal generated by the LIDAR device 12.

The scenario generation module forwards the generated test scenario to the control and/or analysis module 28.

The control and/or analysis module 28 causes the signal response generator module 30 to generate a response signal for the LIDAR device 12.

Therein, the control and/or analysis module 28 takes the generated test scenario and the simulated scan signal(s) into account. In other words, the control and/or analysis module 28 controls the signal response generator module 30 to generate a suitable response signal for the LIDAR device 12 based on the generated test scenario and based on the simulated scan signal(s).

More precisely, the control and/or analysis module 28 controls the signal response generator module 30 to generate the response signal(s) with a predetermined time delay with respect to the simulated scan signal(s), such that the objects (e.g. targets and obstacles) in the test scenario are correctly simulated for the LIDAR device 12.

With the LIDAR target simulation system 10 described above, a response signal that corresponds to a further scan signal of the LIDAR device 12 may be generated before that further scan signal even arrives at the pattern detection module 26. Thus, the distance between the LIDAR device 12 and the pattern detection module is not a delimiting factor for simulating targets any more.

In fact, targets that are closer than the distance between the LIDAR device 12 and the pattern detection module 26 can be simulated by means of the LIDAR target simulation system 10 described above.

Moreover, the processing time of the LIDAR target simulation system 10 can also be accounted for or rather compensated by the LIDAR target simulation system 10 described above. The generated response signal may be time-shifted in order to compensate for the processing time of the LIDAR target simulation system 10. Thus, the minimum possible simulation distance is reduced even further.

In fact, it is even possible to reduce the minimum target simulation distance to 0 with the LIDAR target simulation system 10 described above.

It is noted that the LIDAR device 12 may also be established as a flash LIDAR device.

In general, flash LIDAR devices illuminate the whole environment to be scanned at once instead of scanning the environment with a pattern or rather raster of individual smaller light pulses. Accordingly, characteristic parameters associated with the flash LIDAR device 12 may be the pulse shape of the scan signal, the angle of departure of the scan signal, the pulse rate of the scan signal and the repetition rate (frame rate) of the scan signal, wherein the pulse rate is equal to the repetition rate (frame rate).

Apart from these differences, the explanations given above also apply to the case of the LIDAR device 12 being established as a flash LIDAR device 12.

Figure 3 shows a second embodiment of the LIDAR target simulation system 10, wherein only the differences compared to the first embodiment described above are described hereinafter.

In the shown embodiment, the signal response generator module 30 comprises an analog pulse responder 42.

In general, the analog pulse responder 42 is configured to autonomously generate the response signal to be received by the LIDAR device.

The analog pulse responder 42 may comprise a detection circuit, wherein the detection circuit is configured to detect the at least one scan signal generated by the LIDAR device 12.

Upon detection of a scan signal generated by the LIDAR device 12, the analog pulse responder 42 starts integrating a constant voltage signal over time.

The analog pulse responder 42 compares a value of the integrated voltage signal with a predefined threshold continuously or after predetermined time intervals.

The analog pulse responder 42 generates the response signal when the integrated voltage signal reaches a predefined threshold. This way, the response signal is generated with a predetermined delay, wherein the predetermined delay depends on the magnitude of the constant voltage signal and on the magnitude of the predefined threshold.

The signal response generator module 30 may be controlled by the control and/or analysis module 28 to adjust a magnitude of the constant voltage signal and/or the magnitude of the predefined threshold based on the at least one simulated scan signal of the LIDAR device 12 and/or based on the test scenario.

Thus, the predetermined delay can be adjusted by adjusting the magnitude of the of the constant voltage signal and/or the magnitude of the predefined threshold, such that the targets and/or obstacles in the test scenario are correctly simulated for the LIDAR device 12.

Irrespective of the embodiment, the response signal may be generated by the signal response signal generator module 30 by means of a laser 44, an attenuator 46, and a diffusor 48.

For instance, the laser 44 may be controlled such that the response signal is modulated concerning its intensity in an appropriate manner depending on the respective target scenario applied.

In a similar manner, the attenuator 46 may be controlled appropriately by the control and/or analysis module such that the response signal provided by the signal response generator module 30 is attenuated depending on the target scenario applied.

The diffusor 48 may also be controlled such that the response signal is diffused in a controlled manner.

In general, the response signal may be generated in any way that is suitable such that the test scenario is correctly simulated for the LIDAR device 12. Particularly, the response signal is projected on the rear side 24 of the screen, and the LIDAR device 12 captures the light shining through the screen 20 by means of the light receiving unit 16.

Particular suitable examples of how the response signal may be generated are described in European patent application number EP20184311.7.

Certain embodiments disclosed herein, particularly the respective module(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A LIDAR target simulation system for testing a LIDAR device (12), the LIDAR target simulation system (10) comprising a scenario generation module (40), a pattern detection module (26), a LIDAR simulation module (29), and a signal response generator module (30),
wherein the scenario generation module (40)is configured to generate a test scenario for testing the LIDAR device (12),
wherein the pattern detection module (26) is configured to receive at least one scan signal generated by the LIDAR device (12) to be tested, wherein the pattern detection module (26) further is configured to determine at least one characteristic parameter of the received scan signal, wherein the at least one characteristic parameter is associated with properties of the at least one scan signal,
wherein the LIDAR simulation module (29) is configured to simulate at least one current scan signal of the LIDAR device (12) based on the at least one characteristic parameter, wherein the LIDAR simulation module (29) is configured to simulate at least one future scan signal of the LIDAR device (12) based on the at least one characteristic parameter, and
wherein the signal response generator module (30) is configured to generate a response signal to be received by the LIDAR device (12) to be tested, wherein the signal response generator module (30) is configured to generate the response signal based on the at least one simulated scan signal of the LIDAR device (12) and based on the test scenario.

2. The LIDAR target simulation system according to claim 1, wherein the at least one characteristic parameter comprises a pulse shape of the at least one scan signal, an angle of departure of the at least one scan signal, a time of detection of the at least one scan signal, pulse rate of the at least one scan signal, a pulse position of the at least one scan signal, a line rate of the at least one scan signal, a column rate of the at least one scan signal, and/or a repetition rate of the at least one scan signal.

3. The LIDAR target simulation system according to any one of the preceding claims, wherein the LIDAR simulation module (29) is configured to simulate the at least one current scan signal and the at least one future scan signal of the LIDAR device (12) based on a state space model of the LIDAR device (12).

4. The LIDAR target simulation system according to claim 3, wherein the LIDAR simulation module (29) comprises a Kalman filter (36) and/or a machine-learning module (38), wherein the Kalman filter (36) and/or the machine-learning module (38) is configured to simulate the at least one current scan signal and the at least one future scan signal of the LIDAR device (12) based on the state space model of the LIDAR device (12).

5. The LIDAR target simulation system according to claim 3 or 4, wherein the pattern detection module (26) is configured to receive at least one further scan signal generated by the LIDAR device (12) during testing of the LIDAR device (12), wherein the pattern detection module (26) further is configured to determine at least one updated characteristic parameter of the LIDAR device (12) based on the at least one further scan signal, and wherein the LIDAR simulation module (29) is configured to update parameters of the state space model based on the at least one updated characteristic parameter.

6. The LIDAR target simulation system according to claim 5, wherein the LIDAR simulation module (29) is configured to update the parameters of the state space model by means of a closed-loop control technique.

7. The LIDAR target simulation system according to any one of the preceding claims, wherein the signal response generator module (30) comprises an analog pulse responder (42), and wherein the analog pulse responder (42) is configured to generate the response signal to be received by the LIDAR device (12).

8. The LIDAR target simulation system according to claim 7, wherein the analog pulse responder (42) comprises an analog integrator, wherein the analog integrator is configured to integrate a constant voltage signal, thereby obtaining an integrated voltage signal, and wherein the analog pulse responder (42) is configured to generate the response signal when the integrated voltage signal reaches a predefined threshold.

9. The LIDAR target simulation system of claim 8, wherein the signal response generator module (30) is configured to adjust a magnitude of the constant voltage signal and/or the predefined threshold based on the at least one simulated scan signal of the LIDAR device (12) and/or based on the test scenario.

10. The LIDAR target simulation system of claim 8 or 9, wherein the analog integrator is configured to start integrating the constant voltage signal upon detection of the at least one scan signal.

11. The LIDAR target simulation system according to any one of the preceding claims, wherein the signal response generator module (30) is configured to generate the response signal with a predetermined time delay, particularly wherein the predetermined time delay depends on the at least one simulated scan signal of the LIDAR device (12) and/or on the test scenario.

12. The LIDAR target simulation system according to any one of the preceding claims, wherein the test scenario is a three-dimensional test scenario and/or wherein the test scenario comprises at least one object, wherein a simulated distance of the at least one object is smaller than a length corresponding to the speed of light times a processing time of the signal response generator module.

13. The LIDAR target simulation system according to any one of the preceding claims, wherein the LIDAR device (12) is a flash LIDAR device.

14. A method of testing a LIDAR device by means of a LIDAR target simulation system (10) according to any one of the preceding claims, the method comprising the following steps:
- generating a test scenario for testing the LIDAR device (12) by means of the scenario generation module (40);
- receiving at least one scan signal generated by the LIDAR device (12) by means of the pattern detection module (26);
- determining at least one characteristic parameter of the received scan signal by means of the pattern detection module (26), wherein the at least one characteristic parameter is associated with properties of the at least one scan signal;
- simulating at least one current and/or future scan signal of the LIDAR device (12) based on the at least one characteristic parameter by means of the LIDAR simulation module (29); and
- generating a response signal to be received by the LIDAR device (12) by means of the signal response generator module (30), wherein the signal response generator module (30) is configured to generate the response signal based on the at least one simulated scan signal of the LIDAR device (12) and based on the test scenario.

15. The method of claim 14, wherein the at least one current and/or future scan signal of the LIDAR device (12) is simulated based on a state space model of the LIDAR device (12).

## Patentansprüche

1. LIDAR-Zielsimulationssystem zum Testen einer LIDAR-Vorrichtung (12), das LIDAR-Zielsimulationssystem (10) umfassend ein Szenarioerzeugungsmodul (40), ein Mustererkennungsmodul (26), ein LIDAR-Simulationsmodul (29) und ein Signalantwortgeneratormodul (30),
wobei das Szenarioerzeugungsmodul (40) konfiguriert ist, um ein Testszenario zum Testen der LIDAR-Vorrichtung (12) zu erzeugen,
wobei das Mustererkennungsmodul (26) konfiguriert ist, um mindestens ein Scansignal, das durch die zu testende LIDAR-Vorrichtung (12) erzeugt wird, zu empfangen, wobei das Mustererkennungsmodul (26) ferner konfiguriert ist, um mindestens einen Merkmalsparameter des empfangenen Scansignals zu bestimmen, wobei der mindestens eine Merkmalsparameter mit Eigenschaften des mindestens einen Scansignals verknüpft ist,
wobei das LIDAR-Simulationsmodul (29) konfiguriert ist, um mindestens ein aktuelles Scansignal der LIDAR-Vorrichtung (12) basierend auf dem mindestens einen Merkmalsparameter zu simulieren, wobei das LIDAR-Simulationsmodul (29) konfiguriert ist, um mindestens ein zukünftiges Scansignal der LIDAR-Vorrichtung (12) basierend auf dem mindestens einen Merkmalsparameter zu simulieren, und
wobei das Signalantwortgeneratormodul (30) konfiguriert ist, um ein Antwortsignal, das durch die zu testende LIDAR-Vorrichtung (12) empfangen werden soll, zu erzeugen, wobei das Signalantwortgeneratormodul (30) konfiguriert ist, um das Antwortsignal basierend auf dem mindestens einen simulierten Scansignal der LIDAR-Vorrichtung (12) und basierend auf dem Testszenario zu erzeugen.

2. LIDAR-Zielsimulationssystem nach Anspruch 1, wobei der mindestens eine Merkmalsparameter eine Impulsform des mindestens einen Scansignals, einen Elevationswinkel des mindestens einen Scansignals, eine Erkennungszeit des mindestens einen Scansignals, eine Impulsrate des mindestens einen Scansignals, eine Impulsposition des mindestens einen Scansignals, eine Zeilenfrequenz des mindestens einen Scansignals, eine Spaltenfrequenz des mindestens einen Scansignals und/oder eine Wiederholungsrate des mindestens einen Scansignals umfasst.

3. LIDAR-Zielsimulationssystem nach einem der vorstehenden Ansprüche, wobei das LIDAR-Simulationsmodul (29) konfiguriert ist, um das mindestens eine aktuelle Scansignal und das mindestens eine zukünftige Scansignal der LIDAR-Vorrichtung (12) basierend auf einem Zustandsraummodell der LIDAR-Vorrichtung (12) zu simulieren.

4. LIDAR-Zielsimulationssystem nach Anspruch 3, wobei das LIDAR-Simulationsmodul (29) einen Kalman-Filter (36) und/oder ein Maschinenlernenmodul (38) umfasst, wobei der Kalman-Filter (36) und/oder das Maschinenlernenmodul (38) konfiguriert ist, um das mindestens eine aktuelle Scansignal und das mindestens eine zukünftige Scansignal der LIDAR-Vorrichtung (12) basierend auf dem Zustandsraummodell der LIDAR-Vorrichtung (12) zu simulieren.

5. LIDAR-Zielsimulationssystem nach Anspruch 3 oder 4, wobei das Mustererkennungsmodul (26) konfiguriert ist, um mindestens ein weiteres Scansignal, das durch die LIDAR-Vorrichtung (12) während eines Tests der LIDAR-Vorrichtung (12) erzeugt wird, zu empfangen, wobei das Mustererkennungsmodul (26) ferner konfiguriert ist, um mindestens einen aktualisierten Merkmalsparameter der LIDAR-Vorrichtung (12) basierend auf dem mindestens einen weiteren Scansignal zu bestimmen, und wobei das LIDAR-Simulationsmodul (29) konfiguriert ist, um Parameter des Zustandsraummodells basierend auf dem mindestens einen aktualisierten Merkmalsparameter zu aktualisieren.

6. LIDAR-Zielsimulationssystem nach Anspruch 5, wobei das LIDAR-Simulationsmodul (29) konfiguriert ist, um die Parameter des Zustandsraummodells mittels einer Regelungstechnik zu aktualisieren.

7. LIDAR-Zielsimulationssystem nach einem der vorstehenden Ansprüche, wobei das Signalantwortgeneratormodul (30) einen Analog-Impulsantwortgeber (42) umfasst, und wobei der Analog-Impulsantwortgeber (42) konfiguriert ist, um das Antwortsignal, das durch die LIDAR-Vorrichtung (12) empfangen werden soll, zu erzeugen.

8. LIDAR-Zielsimulationssystem nach Anspruch 7, wobei der Analog-Impulsantwortgeber (42) einen analogen Integrator umfasst, wobei der analoge Integrator konfiguriert ist, um ein konstantes Spannungssignal zu integrieren, wobei dadurch ein integriertes Spannungssignal erhalten wird, und wobei der Analog-Impulsantwortgeber (42) konfiguriert ist, um das Antwortsignal zu erzeugen, wenn das integrierte Spannungssignal eine vordefinierte Schwelle erreicht.

9. LIDAR-Zielsimulationssystem nach Anspruch 8, wobei das Signalantwortgeneratormodul (30) konfiguriert ist, um eine Größe des konstanten Spannungssignals und/oder der vordefinierten Schwelle basierend auf dem mindestens einen simulierten Scansignal der LIDAR-Vorrichtung (12) und/oder basierend auf dem Testszenario anzupassen.

10. LIDAR-Zielsimulationssystem nach Anspruch 8 oder 9, wobei der analoge Integrator konfiguriert ist, um zu beginnen, das konstante Spannungssignal bei Erkennung des mindestens einen Scansignals zu integrieren.

11. LIDAR-Zielsimulationssystem nach einem der vorstehenden Ansprüche, wobei das Signalantwortgeneratormodul (30) konfiguriert ist, um das Antwortsignal mit einer zuvor bestimmten Zeitverzögerung zu erzeugen, insbesondere wobei die zuvor bestimmte Zeitverzögerung von dem mindestens einen simulierten Scansignal der LIDAR-Vorrichtung (12) und/oder von dem Testszenario abhängt.

12. LIDAR-Zielsimulationssystem nach einem der vorstehenden Ansprüche, wobei das Testszenario ein dreidimensionales Testszenario ist und/oder wobei das Testszenario mindestens ein Objekt umfasst, wobei eine simulierte Entfernung des mindestens einen Objekts kleiner als eine Länge, die der Lichtgeschwindigkeit mal einer Verarbeitungszeit des Signalantwortgeneratormoduls entspricht, ist.

13. LIDAR-Zielsimulationssystem nach einem der vorstehenden Ansprüche, wobei die LIDAR-Vorrichtung (12) eine Flash-LIDAR-Vorrichtung ist.

14. Verfahren zum Testen einer LIDAR-Vorrichtung mittels eines LIDAR-Zielsimulationssystems (10) nach einem der vorstehenden Ansprüche, das Verfahren umfassend die folgenden Schritte:
- Erzeugen eines Testszenarios zum Testen der LIDAR-Vorrichtung (12) mittels des Szenarioerzeugungsmoduls (40);
- Empfangen mindestens eines Scansignals, das durch die LIDAR-Vorrichtung (12) erzeugt wird, mittels des Mustererkennungsmoduls (26);
- Bestimmen mindestens eines Merkmalsparameters des empfangenen Scansignals mittels des Musterkennungsmoduls (26), wobei der mindestens eine Merkmalsparameter mit Eigenschaften des mindestens einen Scansignals verknüpft ist;
- Simulieren mindestens eines aktuellen und/oder zukünftigen Scansignals der LIDAR-Vorrichtung (12) basierend auf dem mindestens einen Merkmalsparameter mittels des LIDAR-Simulationsmoduls (29); und
- Erzeugen eines Antwortsignals, das durch die LIDAR-Vorrichtung (12) mittels des Signalantwortgeneratormoduls (30) empfangen werden soll, wobei das Signalantwortgeneratormodul (30) konfiguriert ist, um das Antwortsignal basierend auf dem mindestens einen simulierten Scansignal der LIDAR-Vorrichtung (12) und basierend auf dem Testszenario zu erzeugen.

15. Verfahren nach Anspruch 14, wobei das mindestens eine aktuelle und/oder zukünftige Scansignal der LIDAR-Vorrichtung (12) basierend auf einem Zustandsraummodell der LIDAR-Vorrichtung (12) simuliert wird.

## Revendications

1. Système de simulation de cible LIDAR permettant de tester un dispositif LIDAR (12), le système de simulation de cible LIDAR (10) comprenant un module de génération de scénario (40), un module de détection de motif (26), un module de simulation LIDAR (29), et un module générateur de réponse de signal (30),
dans lequel le module de génération de scénario (40) est configuré pour générer un scénario de test permettant de tester le dispositif LIDAR (12),
dans lequel le module de détection de motif (26) est configuré pour recevoir au moins un signal de balayage généré par le dispositif LIDAR (12) destiné à être testé, dans lequel le module de détection de motif (26) est en outre configuré pour déterminer au moins un paramètre caractéristique du signal de balayage reçu, dans lequel l'au moins un paramètre caractéristique est associé à des propriétés de l'au moins un signal de balayage,
dans lequel le module de simulation LIDAR (29) est configuré pour simuler au moins un signal de balayage actuel du dispositif LIDAR (12) en fonction de l'au moins un paramètre caractéristique, dans lequel le module de simulation LIDAR (29) est configuré pour simuler au moins un signal de balayage futur du dispositif LIDAR (12) en fonction de l'au moins un paramètre caractéristique, et
dans lequel le module générateur de réponse de signal (30) est configuré pour générer un signal de réponse destiné à être reçu par le dispositif LIDAR (12) destiné à être testé, dans lequel le module générateur de réponse de signal (30) est configuré pour générer le signal de réponse en fonction de l'au moins un signal de balayage simulé du dispositif LIDAR (12) et en fonction du scénario de test.

2. Système de simulation de cible LIDAR selon la revendication 1, dans lequel l'au moins un paramètre caractéristique comprend une forme d'impulsion de l'au moins un signal de balayage, un angle de départ de l'au moins un signal de balayage, un temps de détection de l'au moins un signal de balayage, une fréquence d'impulsion de l'au moins un signal de balayage, une position d'impulsion de l'au moins un signal de balayage, une fréquence de ligne de l'au moins un signal de balayage, une fréquence de colonne de l'au moins un signal de balayage, et/ou une fréquence de répétition de l'au moins un signal de balayage.

3. Système de simulation de cible LIDAR selon l'une quelconque des revendications précédentes, dans lequel le module de simulation LIDAR (29) est configuré pour simuler l'au moins un signal de balayage actuel et l'au moins un signal de balayage futur du dispositif LIDAR (12) en fonction d'un modèle d'espace d'états du dispositif LIDAR (12).

4. Système de simulation de cible LIDAR selon la revendication 3, dans lequel le module de simulation LIDAR (29) comprend un filtre de Kalman (36) et/ou un module d'apprentissage automatique (38), dans lequel le filtre de Kalman (36) et/ou le module d'apprentissage automatique (38) sont configurés pour simuler l'au moins un signal de balayage actuel et l'au moins un signal de balayage futur du dispositif LIDAR (12) en fonction du modèle d'espace d'états du dispositif LIDAR (12).

5. Système de simulation de cible LIDAR selon la revendication 3 ou 4, dans lequel le module de détection de motif (26) est configuré pour recevoir au moins un autre signal de balayage généré par le dispositif LIDAR (12) pendant un test du dispositif LIDAR (12), dans lequel le module de détection de motif (26) est en outre configuré pour déterminer au moins un paramètre caractéristique mis à jour du dispositif LIDAR (12) en fonction de l'au moins un autre signal de balayage, et dans lequel le module de simulation LIDAR (29) est configuré pour mettre à jour des paramètres du modèle d'espace d'états en fonction de l'au moins un paramètre caractéristique mis à jour.

6. Système de simulation de cible LIDAR selon la revendication 5, dans lequel le module de simulation LIDAR (29) est configuré pour mettre à jour les paramètres du modèle d'espace d'états au moyen d'une technique de commande en boucle fermée.

7. Système de simulation de cible LIDAR selon l'une quelconque des revendications précédentes, dans lequel le module générateur de réponse de signal (30) comprend un répondeur d'impulsion analogique (42), et dans lequel le répondeur d'impulsion analogique (42) est configuré pour générer le signal de réponse devant être reçu par le dispositif LIDAR (12).

8. Système de simulation de cible LIDAR selon la revendication 7, dans lequel le répondeur d'impulsion analogique (42) comprend un intégrateur analogique, dans lequel l'intégrateur analogique est configuré pour intégrer un signal de tension constante, ce qui permet d'obtenir un signal de tension intégré, et dans lequel le répondeur d'impulsion analogique (42) est configuré pour générer le signal de réponse lorsque le signal de tension intégré atteint un seuil prédéfini.

9. Système de simulation de cible LIDAR selon la revendication 8, dans lequel le module générateur de réponse de signal (30) est configuré pour ajuster une amplitude du signal de tension constante et/ou le seuil prédéfini en fonction de l'au moins un signal de balayage simulé du dispositif LIDAR (12) et/ou en fonction du scénario de test.

10. Système de simulation de cible LIDAR selon la revendication 8 ou 9, dans lequel l'intégrateur analogique est configuré pour commencer à intégrer le signal de tension constante dès la détection de l'au moins un signal de balayage.

11. Système de simulation de cible LIDAR selon l'une quelconque des revendications précédentes, dans lequel le module générateur de réponse de signal (30) est configuré pour générer le signal de réponse avec un retard temporel prédéterminé, en particulier dans lequel le retard temporel prédéterminé dépend de l'au moins un signal de balayage simulé du dispositif LIDAR (12) et/ou du scénario de test.

12. Système de simulation de cible LIDAR selon l'une quelconque des revendications précédentes, dans lequel le scénario de test est un scénario de test tridimensionnel et/ou dans lequel le scénario de test comprend au moins un objet, dans lequel une distance simulée de l'au moins un objet est inférieure à une longueur correspondant à la vitesse de la lumière fois un temps de traitement du module générateur de réponse de signal.

13. Système de simulation de cible LIDAR selon l'une quelconque des revendications précédentes, dans lequel le dispositif LIDAR (12) est un dispositif LIDAR flash.

14. Procédé de test d'un dispositif LIDAR au moyen d'un système de simulation de cible LIDAR (10) selon l'une quelconque des revendications précédentes, le procédé comprenant les étapes suivantes :
- générer un scénario de test permettant de tester le dispositif LIDAR (12) au moyen du module de génération de scénario (40) ;
- recevoir au moins un signal de balayage généré par le dispositif LIDAR (12) au moyen du module de détection de motif (26) ;
- déterminer au moins un paramètre caractéristique du signal de balayage reçu au moyen du module de détection de motif (26), dans lequel l'au moins un paramètre caractéristique est associé à des propriétés de l'au moins un signal de balayage ;
- simuler au moins un signal de balayage actuel et/ou futur du dispositif LIDAR (12) en fonction de l'au moins un paramètre caractéristique au moyen du module de simulation LIDAR (29) ; et
- générer un signal de réponse destiné à être reçu par le dispositif LIDAR (12) au moyen du module générateur de réponse de signal (30), dans lequel le module générateur de réponse de signal (30) est configuré pour générer le signal de réponse en fonction de l'au moins un signal de balayage simulé du dispositif LIDAR (12) et en fonction du scénario de test.

15. Procédé selon la revendication 14, dans lequel l'au moins un signal de balayage actuel et/ou futur du dispositif LIDAR (12) est simulé en fonction d'un modèle d'espace d'états du dispositif LIDAR (12).
